# DEMANDE DE BREVET EUROPEEN

(11) **EP 1 462 507 A1**
(43) Date de publication de la demande: **29.09.2004**
(21) Numéro de dépôt: 03006605.4
(22) Date de dépôt: 25.03.2003
(51) Int. Cl.: C10L 5/28, C10L 5/14

(54) **Procédé pour la fabrication d'agglomérés et agglomérés combustibles**

(71) Demandeur: Wautelet, Philippe, 6240 Farciennes (BE)
(72) Inventeur: Wautelet, Philippe, 6240 Farciennes (BE)

(57) **Abrégé**

Procédé pour la fabrication d'agglomérés, dans lequel on soumet un mélange de fines (1) et d'une résine (2) polymérisable par chauffage à un malaxage pour former des boulettes (11) et on soumet les boulettes à un chauffage par micro-ondes (13).

Agglomérés combustibles obtenus par le procédé et comprenant des fines de charbon et une résine polymérisable à chaud.

## Description

L'invention concerne la fabrication d'agglomérés de matières pulvérulentes, en particulier d'agglomérés de fines combustibles.

De nombreuses techniques industrielles produisent des fines (particules solides de petites dimensions), qu'il est nécessaire de récupérer pour des raisons économiques ou environnementales.

Une émission importante de fine est notamment générée par l'extraction minière de la plupart des matières minérales, telles que les minerais métalliques, le charbon, le marbre et le calcaire, par exemple.

Les traitements mécanique d'enrichissement ou de lavage des matières minières, notamment les traitements de concassage, broyage et criblage génèrent également des quantités importantes de fines qu'il est opportun de récupérer et de conditionner pour les rendre utilisables dans des processus industriels.

Une autre source importante de fines réside dans les techniques de dépoussiérage des fumées industrielles, notamment par filtration mécanique ou sur électro-filtres.

Certains procédés industriels génèrent des boues qui, après séchage, laissent un résidu de fines. C'est particulièrement le cas des boues provenant de l'épuration des eaux de surface, ainsi que des boues recueillies lors du dragage des cours d'eau.

Pour permettre une exploitation économique des fines recueillies des procédés industriels, il est généralement nécessaire de les agglomérer.

Dans le cas des matières combustibles, particulièrement de la houille, l'agglomération du poussier de charbon peut poser des difficultés, du fait qu'il faut éviter tout risque d'inflammation du combustible au cours de l'agglomération.

Diverses techniques existent pour fabriquer des agglomérés de fines minérales.

Une première technique connue consiste à humidifier les fines puis à les compacter pour former des boulettes que l'on soumet alors à un frittage pour agglutiner les fines et les lier entre-elles. Cette technique connue, applicables aux matières métalliques, n'est pas utilisables pour des matières friables ou inflammables, notamment du poussier de charbon.

Dans le document US-A-3 762 886, on décrit un procédé pour la fabrication de briquettes de charbon, selon lequel on mélange des poussières calibrées de charbon avec un liant hydraulique et de l'eau, on compacte le mélange à l'état de briquettes et on soumet ensuite les briquettes à des conditions réglées d'humidité pour provoquer la prise du liant hydraulique. Cette technique connue présente l'inconvénient de nécessiter des efforts de compression élevés, ce qui implique l'utilisation de presses puissantes et grève le coût de fabrication. Un autre inconvénient de ce procédé connu réside dans la présence d'un liant hydraulique qui, n'étant pas combustible, nuit au pouvoir calorifique des briquettes et accroît la production de cendres.

Dans le document US-A-4 990 081, on décrit un autre procédé pour fabriquer des agglomérés de charbon, selon lequel on mélange dans un moule des fines d'une substance carbonée (coke, anthracite, graphite) avec un liant cokéfiable tel que du goudron, de manière à former une pâte que l'on soumet ensuite à un effort de compression.

Dans le document BE-A-891 343, on décrit un procédé de fabrication d'agents carburants destinés à l'industrie sidérurgique, selon lequel on mélange des particules de carbone avec un liant cellulosique, de l'eau et un agent gélifiant, on soumet le mélange à une agglomération pour former des agglomérés ayant par exemple la forme de briquettes ou de boulettes et on chauffe les agglomérés pour les sécher. Ce procédé connu est compliqué. Il requiert en outre une opération onéreuse de séchage qui, en outre, est susceptible de désintégrer les agglomérats ou de nuire à leur cohésion.

L'invention vise à remédier aux inconvénients des procédés connus décrits plus haut, en fournissant un procédé nouveau, qui permet de fabriquer des agglomérés de fines particules de matière solide de manière économique, les agglomérés ainsi obtenus présentant une bonne cohésion, une haute résistance mécanique et, dans le cas de fines de charbon, un pouvoir calorifique élevé.
En conséquence, l'invention a pour objet un procédé pour la fabrication d'agglomérés, dans lequel on soumet un mélange des fines et d'un liant à un malaxage pour former des boulettes, le procédé se caractérisant en ce qu'on sélectionne, pour le liant, une résine qui est polymérisable par chauffage et en ce qu'après le malaxage, on soumet les boulettes à un chauffage par micro-ondes.

Dans le procédé selon l'invention, les agglomérés sont par définition un rassemblement de fines particules de matière solide liées entre elles pour former une masse cohérente.

Dans le cadre de l'invention, les fines sont, par définition, des particules solides de petites dimensions, dont le diamètre se situe en général au-dessous de 15 mm et n'excède généralement pas 10 mm, le plus souvent 8 mm. En principe, il n'y a pas de limite inférieure à la dimension des fines. En pratique toutefois, le diamètre inférieur admissible est généralement déterminé par la précision de sa mesure, ainsi que par des considérations économiques. On évite habituellement des diamètres inférieurs à 0,01 µm, de préférence à 0,10 µm. Dans le présent mémoire, le diamètre des particules est défini par tamisage sur des tamis de la série Tyler.

La matière des fines n'est pas critique. Elle peut être toute matière solide organique ou inorganique. Elle peut par exemple consister en une matière minérale naturelle, un minerai métallique, une matière fossile (par exemple de la houille) ou un résidu d'un procédé industriel.

Le liant a pour fonction de lier les fines entre elles pour former des boulettes cohérentes.

Selon l'invention, le liant est une résine qui est polymérisable par chauffage. On entend par résine polymérisable par chauffage, une résine naturelle ou synthétique dérivée d'un monomère ou d'un comonomère qui est normalement liquide à la température ambiante et qui, sous l'effet de la chaleur, polymérise pour former alors une masse solide capable de lier les fines entre-elles. Des liants entrant dans le cadre de l'invention comprennent les liants exempts de solvant, connus sous la dénomination anglo-saxonne « hot-melt » et les liants qui, sous l'effet du chauffage, libèrent un solvant. Le liant entrant dans le procédé selon l'invention peut appartenir indifféremment à la classe des polymères et copolymères thermoplastiques et à la classe des polymères et copolymères thermodurcissables. Des exemples de liant convenant pour l'invention comprennent les résines vinyliques, les résines acryliques et cyanoacryliques, les résines époxydes, les résines phénoliques, les résines phénoliques, les aminoplastes, les copolymères d'éthylène et d'acétate de vinyle, les polyamides, les polyesters, les résines urée-formol et les résines mélamine-formol, ainsi que des colles provenant de l'industrie alimentaire telles que, par exemple, de la mélasse (liste non exhaustive).

La quantité de liant dans le mélange doit être suffisante pour que celui-ci assure la cohésion des fines. Elle va dépendre de divers facteurs, notamment de la matière des fines, de leur granulométrie (spécialement du diamètre moyen et de l'étalement granulométrique des fines) et du liant sélectionné. En pratique, dans la majorité des cas, la quantité pondérale de liant mise en oeuvre doit être supérieure à 0,5 (de préférence à 1) % du poids total du mélange de fines et de liant. Il convient d'éviter d'utiliser une quantité excédentaire de liant, pour ne pas nuire à la porosité des boulettes. En pratique, on recommande que la quantité pondérale de liant dans le mélange soit inférieure à 50 (de préférence 25) % du poids du mélange. Des quantités pondérales de liant comprises entre 2 et 20 % du poids du mélange conviennent bien dans la majorité des cas, celles comprises entre 5 et 10 % étant préférées.

Dans le procédé selon l'invention, le malaxage a pour fonction de disperser le liant de manière sensiblement homogène parmi les fines et de former des boulettes cohérentes. Il peut être effectué dans tout malaxeur approprié, par exemple dans un tambour rotatif, incliné sur l'horizontal du type de ceux communément utilisés dans l'industrie sidérurgique pour l'agglomération des fines particules de minerai. En variante, les boulettes recueillies du malaxage sont traitées dans un moule approprié pour modifier leur forme. Le moule est défini par la forme recherchée pour des agglomérés et peut par exemple être sphérique, ovoïdal ou parallélépipédique.

Dans le présent mémoire, le terme « boulette » est pris dans son acceptation générale et désigne toute forme solide compatible avec le procédé selon l'invention. Les boulettes peuvent avoir indifféremment une forme sphérique, hémisphérique, ovoïde, parallélépipédique ou prismatique.

Le volume et la forme des boulettes dépend de l'application à laquelle on destine les agglomérés. Par exemple, dans le cas d'agglomérés de charbon destinés à l'industrie métallurgique, on cherche habituellement à former des boulettes sphériques dont le diamètre se situe entre 2 et 200 mm, de préférence entre 10 et 100 mm, ou des boulettes de forme parallélépipédique (ou briquettes) de volume équivalent. La cohérence des boulettes à l'issue du compactage doit être suffisante pour que celles-ci résistent, sans se briser, à une manutention jusqu'à l'issue du chauffage par micro-ondes. Comparé aux procédés connus, le procédé selon l'invention présente ainsi la particularité avantageuse de réduire considérablement les efforts de compactage, ce qui facilite sa mise en oeuvre, réduit le coût d'exploitation et permet d'obtenir des agglomérés de plus grande porosité.

Selon l'invention, les boulettes recueillies du compactage sont soumises à un chauffage par micro-ondes. Le chauffage par micro-ondes est bien connu en technique et consiste à soumettre les boulettes à un rayonnement électromagnétique à haute fréquence, celle-ci étant, par définition, supérieure à 300 MHz, généralement comprise entre 300 MHz et 300 GHz [Encyclopédie Internationale des Sciences et des Techniques ; Vol. 8 ; Les Presses de la Cité (1972) ; page 529]. Dans le procédé selon l'invention, le chauffage par micro-ondes a pour fonction de générer dans les boulettes l'énergie suffisante pour polymériser la résine du liant et solidariser les fines entre-elles. Les conditions du chauffage par micro-ondes (en particulier la fréquence et l'intensité des micro-ondes ainsi que la durée du chauffage) vont dépendre de divers paramètres, notamment de la matière et de la granulométrie des fines, du liant mis en oeuvre, de la quantité de liant dans le mélange de fines, de l'intensité du malaxage et de la forme et du volume des boulettes. Elles doivent être déterminées dans chaque cas particulier par un travail de routine au laboratoire. En pratique, dans le cas où les fines comprennent du poussier de charbon, on sélectionne avec avantage une fréquence comprise entre 900 et 5000 MHz.

Le chauffage par micro-ondes peut être exécuté dans tous types de fours adéquats. Dans une forme de réalisation avantageuse du procédé selon l'invention, le chauffage est exécuté dans un four tunnel dans lequel on fait circuler les boulettes.

Dans une forme de réalisation avantageuse du procédé selon l'invention, le mélange de fines et du liant comprend de l'eau. Dans cette forme de réalisation du procédé selon l'invention, l'eau a pour fonction de faciliter, d'accélérer et d'homogénéiser l'échauffement des boulettes par les micro-ondes. La teneur pondérale en eau du mélange est avantageusement supérieure à 0,1 %, de préférence à 0,5 % de la masse totale des fines, du liant et de l'eau. La teneur maximum en eau du mélange doit toutefois être compatible avec la conservation de l'homogénéité du mélange formé des fines, du liant et de l'eau pendant toutes les étapes du procédé selon l'invention. En pratique, la teneur pondérale du mélange en eau est inférieure à 30 % (de préférence à 20 % de la masse totale des fines, du liant et de l'eau. Des teneurs pondérales en eau de 1 à 15 % (de préférence de 2 à 10 %) de la masse totale des fines, du liant et de l'eau conviennent généralement bien. Dans cette forme de réalisation particulière du procédé selon l'invention, une partie au moins de l'eau, du mélange est apportée par l'humidité des fines.

Le procédé selon l'invention est applicable à toute matière solide pulvérulente, organique ou inorganique. Il trouve notamment des applications pour une valorisation industrielle des poussières recueillies du dépoussiérage des fumées, des fines produites dans les installations de broyage et de criblage des minerais et des charbons, ainsi que des fines obtenues par séchage des boues de dragage des cours d'eau ou par séchage des boues d'épuration des eaux de surface.

Le procédé selon l'invention s'applique avec avantage à la formation d'agglomérés de charbon au départ de poussier de charbon. Dans cette application du procédé selon l'invention, la qualité et l'origine du charbon ne sont pas critique, celui-ci pouvant être indifféremment un charbon maigre, par exemple de l'anthracite ou un charbon gras. L'origine du poussier de charbon n'est pas critique non plus. Celui-ci peut par exemple provenir d'une installation de lavage, broyage et criblage de charbon. L'invention trouve également une application intéressante dans la valorisation du charbon récupéré des terrils de charbonnage, notamment les schlamms (qui avant l'invention, étaient habituellement rejetés).

Les agglomérés de charbon obtenus au moyen du procédé selon l'invention possèdent d'excellentes propriétés combustibles, du fait qu'ils associent le pouvoir calorifique des fines de charbon à celui du liant polymérique.

L'invention concerne dès lors également des agglomérés combustibles, obtenus au moyen du procédé selon l'invention, comprenant des fines de charbon et une résine polymérisable à chaud.

Les caractéristiques des fines de charbon et du liant des agglomérés combustibles selon l'invention ont été définies plus haut en relation avec le procédé selon l'invention.

Dans une forme de réalisation particulière des agglomérés combustibles selon l'invention, ceux-ci comprennent un agent désulfurant, en plus des fines et du liant. Dans cette forme de réalisation de l'invention, l'agent désulfurant a pour fonction de réduire l'émission d'oxyde de soufre et d'acide sulfurique pendant la combustion des agglomérés selon l'invention. La teneur en agent désulfurant des agglomérés va dès lors dépendre de la teneur en soufre des fines de charbon utilisé et elle doit être déterminée dans chaque cas particulier par le calcul ou un essai de routine au laboratoire. La chaux constitue un agent désulfurant préféré, selon l'invention. Dans cette variante de l'invention, la chaux peut être de la chaux vive ou de la chaux éteinte. La chaux vive est préférée. En pratique, on recommande que la teneur pondérale des agglomérés en chaux soit supérieure à 0,5 % (de préférence à 1 %) et inférieure à 20 % (de préférence à 10 %). Des teneurs pondérales en chaux situées entre 2 et 8 % conviennent généralement bien, les teneurs de 2,5 à 5 % étant spécialement avantageuses.

Dans une forme de réalisation avantageuse des agglomérés selon l'invention, le liant comprend une colle contenant un liant volatile, avantageusement une colle urée-formol. Dans cette forme de réalisation des agglomérés selon l'invention, le solvant volatile contribue à l'allumage des fines de charbon dans un foyer. Cette forme de réalisation de l'invention s'applique avantageusement aux agglomérés contenant des fines de charbon maigre, spécialement de l'anthracite.

Les agglomérés combustibles selon l'invention peuvent avoir toute forme compatible avec l'application à laquelle on les destine. Des formes habituelles, utilisables dans la plupart des applications domestiques et industrielles comprennent le boulet sphérique, le boulet ovoïde, le cylindre et la briquette parallélépipédique.

Les agglomérés combustibles selon l'invention trouvent une application comme combustible dans des foyers domestiques ou industriels.

Les agglomérés combustibles selon l'invention trouvent également une application comme apport carboné dans divers procédés industriels, notamment dans l'industrie sidérurgique (où ils sont enfournés dans les haut-fourneaux et les cubilots de fonderie) et dans l'industrie chimique.

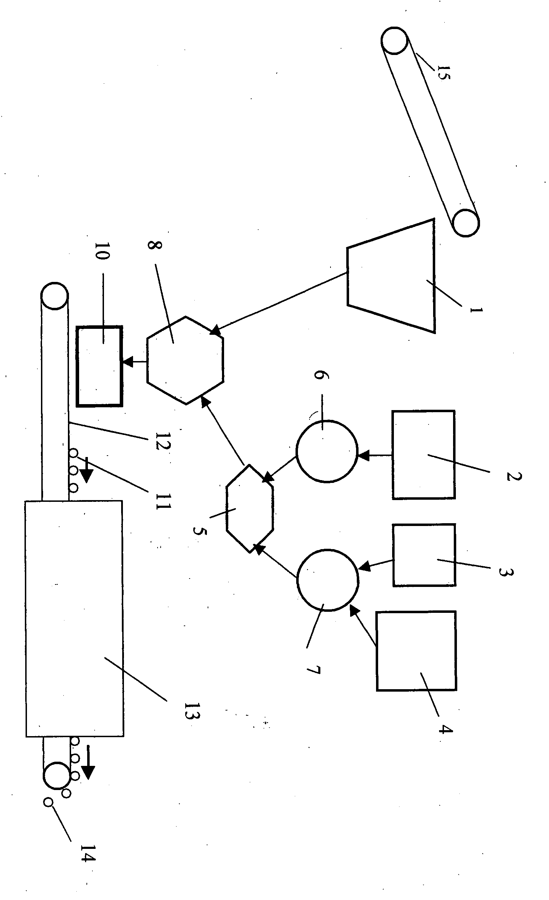

Des particularités et détails de l'invention vont apparaître au cours de la description suivante de la figure unique du dessin annexé, qui représente schématiquement une installation mettant en oeuvre une forme de réalisation particulière du procédé selon l'invention.

L'installation représentée à la figure est spécialement adaptée à la fabrication d'agglomérés combustibles comprenant des fines d'anthracite, de la chaux et un liant. Elle comprend une trémie 1 alimentée avec des fines normalement humides d'anthracite par l'intermédiaire d'un transporteur 15, un silo 2 contenant une résine urée-formol liquide, un silo 3 contenant de la chaux et un silo 4 contenant un mélange d'additifs solides ou liquides (matières volatiles combustibles, eau). Les silos 3, 4 et 5 sont en communication avec un malaxeur 5, par l'intermédiaire de distributeurs 6 et 7 à débit réglable. Le malaxeur 5 et la trémie 1 débouchent dans un malaxeur 8. Des distributeurs à débit réglable (non représentés) peuvent éventuellement être interposés entre la trémie 1 et le malaxeur 8 et entre le malaxeur 5 et le malaxeur 8. L'installation comprend, en aval du malaxeur 8, un dispositif de formage ou de moulage 10. Le dispositif de formage ou de moulage 10 comprend une zone de déversement (non représentée) des produits moulés 11 sur un transporteur continu 12 (par exemple une courroie transporteuse). Le transporteur continu 12 traverse un four tunnel 13 équipé d'un dispositif de chauffage par micro-ondes.

Pendant l'exploitation de l'installation représentée à la figure, on alimente le malaxeur 5 avec la résine provenant du silo 2, la chaux provenant du silo 3 et l'additif provenant du silo 4. Dans le malaxeur, ces trois produits sont mélangés et homogénéisés et ensuite expédiés dans le malaxeur principal 8 que l'on alimente en outre avec les fines d'anthracite à partir de la trémie 1. Dans le malaxeur 8, on réalise un mélange aussi homogène que possible des constituants provenant de la trémie 1 et des trois silos 2, 3 et 4. Le mélange homogène formé dans le malaxeur 8 est transféré dans le dispositif de formage 10. Celui-ci consiste par exemple en un ou plusieurs moules dans lesquels le mélange est moulé sous la forme de briquettes parallélépipédiques. Les briquettes obtenues 11 sont ensuite déversées sur le transporteur 12 et transférées par celui-ci dans le four tunnel 13. Pendant leur passage dans le four tunnel 13, les briquettes 12 sont chauffées à coeur par micro-ondes, ce qui a pour résultat d'évaporer le solvant de la colle et l'humidité des fines, de polymériser le colle urée-formol et de consolider les briquettes. L'évaporation du solvant et de l'eau génère une porosité ouverte dans les briquettes. A la sortie du four 13, on recueille des agglomérés combustibles 14 qui, après refroidissement par exposition à la température ambiante, sont prêts à l'emploi. Du fait de la porosité ouverte qui a été générée pendant la combustion, les agglomérés obtenus présentent d'excellentes propriétés combustibles.

## Revendications

1. Procédé pour la fabrication d'agglomérés, dans lequel on soumet un mélange de fines et d'un liant à un malaxage pour former des boulettes, **caractérisé en ce qu'**on sélectionne, pour le liant, une résine qui est polymérisable par chauffage et **en ce qu'**après le malaxage, on soumet les boulettes à un chauffage par micro-ondes.

2. Procédé selon la revendication 1, **caractérisé en ce qu'**on sélectionne la résine parmi les colles urée-formol et mélamine-formol.

3. Procédé selon la revendication 1 ou 2, **caractérisé en ce que** la matière combustible comprend des fines de charbon.

4. Procédé selon l'une quelconque des revendications 1 à 3, **caractérisé en ce que** la résine est mise en oeuvre en une quantité comprise entre 5 et 10 % du poids du mélange.

5. Procédé selon l'une quelconque des revendications 1 à 4, **caractérisé en ce que** les micro-ondes ont une fréquence sensiblement comprise entre 2000 et 3000 MHz.

6. Procédé selon l'une quelconque des revendications 1 à 5, **caractérisé en ce que** le mélange comprend de l'eau.

7. Agglomérés combustibles comprenant des fines de charbon et une résine polymérisable à chaud.

8. Agglomérés selon la revendication 7, **caractérisés en ce que** la résine comprend une colle urée-formol.

9. Agglomérés combustibles selon la revendication 7 ou 8, **caractérisés en ce qu'**ils comprennent en outre un agent désulfurant.

10. Agglomérés combustibles selon la revendication 9, **caractérisés en ce que** l'agent désulfurant comprend de la chaux.
